(19)

Europäisches
Patentamt
European
Patent Office
Office européen
des brevets

(11) **EP 4 207 351 A1**

(12) **EUROPEAN PATENT APPLICATION**

published in accordance with Art. 153(4) EPC

(43) Date of publication:
**05.07.2023 Bulletin 2023/27**

(21) Application number: **22824092.5**

(22) Date of filing: **07.06.2022**

(51) International Patent Classification (IPC):
*H01M 4/13* (2010.01)          *H01M 4/62* (2006.01)
*H01M 10/0525* (2010.01)

(52) Cooperative Patent Classification (CPC):
Y02E 60/10

(86) International application number:
**PCT/CN2022/097271**

(87) International publication number:
**WO 2022/262612 (22.12.2022 Gazette 2022/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.06.2021   CN 202110662766**

(71) Applicant: **Ningde Amperex Technology Limited
Ningde, Fujian 352100 (CN)**

(72) Inventors:
• ZHU, Shan
  **Ningde, Fujian 352100 (CN)**
• GUAN, Ting
  **Ningde, Fujian 352100 (CN)**
• WU, Fei
  **Ningde, Fujian 352100 (CN)**

(74) Representative: **Icosa
83 avenue Denfert-Rochereau
75014 Paris (FR)**

(54) **ELECTROCHEMICAL APPARATUS AND ELECTRONIC APPARATUS**

(57)     This application provides an electrochemical apparatus and an electronic apparatus. The electrochemical apparatus includes a positive electrode plate. The positive electrode plate includes a positive electrode current collector, a positive electrode active material layer, and a positive electrode coating layer. The positive electrode current collector includes a first zone, a second zone, and a third zone. The positive electrode active material layer includes a first portion, a second portion, and a third portion that are disposed in the first zone, the second zone, and the third zone, respectively. The positive electrode coating layer includes a fourth portion and a fifth portion that are disposed in the first zone and the second zone, respectively. Combined impedance of the first portion and the fourth portion is greater than impedance of the third portion, and combined impedance of the second portion and the fifth portion is greater than the impedance of the third portion. This application optimizes lithiation uniformity for an electrode plate during charging, alleviates lithium precipitation at an edge of the electrode plate, and enlarges a lithium precipitation window, thereby helping improve rate performance of an electrochemical apparatus.

FIG. 1

**Description**

**CROSS-REFERENCE TO RELATED APPLICATIONS**

This application claims priority to Chinese Patent Application No. 202110662766.6, filed on June 15, 2021 and entitled "ELECTROCHEMICAL APPARATUS AND ELECTRONIC APPARATUS", which is incorporated herein by reference in its entirety.

**TECHNICAL FIELD**

This application relates to the electrochemical energy storage field, and in particular, to an electrochemical apparatus and an electronic apparatus.

**BACKGROUND**

During charging and discharging of electrochemical apparatuses (for example, lithium-ion batteries), especially during fast charging, there is a difference between kinetic performance of an edge zone and that of a middle zone of an electrode plate, and consequently the edge zone is prone to lithium precipitation during fast charging at high rate. This limits improvement of fast charging performance of the electrochemical apparatuses.

**SUMMARY**

An embodiment of this application provides an electrochemical apparatus. The electrochemical apparatus includes a positive electrode plate. The positive electrode plate includes a positive electrode current collector, a positive electrode active material layer, and a positive electrode coating layer. Along a width direction of the positive electrode plate, the positive electrode current collector includes a first zone, a second zone, and a third zone located between the first zone and the second zone. The positive electrode active material layer includes a first positive electrode active material. The positive electrode active material layer includes a first portion, a second portion, and a third portion that are disposed in the first zone, the second zone, and the third zone, respectively. The positive electrode coating layer includes a fourth portion and a fifth portion that are disposed in the first zone and the second zone, respectively. The fourth portion is located between the first portion and the first zone, or the first portion is located between the fourth portion and the first zone. The fifth portion is located between the second portion and the second zone, or the second portion is located between the fifth portion and the second zone. Combined impedance of the first portion and the fourth portion is greater than impedance of the third portion, and combined impedance of the second portion and the fifth portion is greater than the impedance of the third portion.

In some embodiments, a ratio of the combined impedance of the fourth portion and the first portion to the impedance of the third portion is 1.02 to 5, and a ratio of the combined impedance of the fifth portion and the second portion to the impedance of the third portion is 1.02 to 5. In some embodiments, a ratio of a width of the fourth portion to a width of the positive electrode active material layer is 0.01 to 0.25, and a ratio of a width of the fifth portion to the width of the positive electrode active material layer is 0.01 to 0.25. In some embodiments, a thickness of the fourth portion is greater than 0.5 $\mu$m and less than 8 $\mu$m. In some embodiments, a thickness of the fifth portion is greater than 0.5 $\mu$m and less than 8 $\mu$m. In some embodiments, a thickness of the third portion is greater than 20 $\mu$m and less than 200 $\mu$m. In some embodiments, the positive electrode coating layer includes a first binder and at least one of conductive carbon, ceramics, or lithium iron phosphate. In some embodiments, a mass percentage of the first binder in the positive electrode coating layer is greater than 20%. In some embodiments, the first binder includes at least one of polyvinylidene fluoride, a copolymer of vinylidene fluoride-fluorinated olefin, polyvinylpyrrolidone, polyacrylonitrile, polymethyl acrylate, polytetrafluoroethylene, sodium carboxymethyl cellulose, styrene-butadiene rubber, polyurethane, fluorinated rubber, or polyvinyl alcohol. In some embodiments, the conductive carbon includes at least one of conductive carbon black, carbon nanotubes, conductive graphite, graphene, acetylene black, or carbon nanofibers. In some embodiments, a combined thickness of the first portion and the fourth portion is the same as a thickness of the third portion, and a combined thickness of the second portion and the fifth portion is the same as the thickness of the third portion.

Another embodiment of this application provides an electrochemical apparatus. The electrochemical apparatus includes a negative electrode plate. The negative electrode plate includes a negative electrode current collector, a negative electrode active material layer, and a negative electrode coating layer. Along a width direction of the negative electrode plate, the negative electrode current collector includes a first zone, a second zone, and a third zone located between the first zone and the second zone. The negative electrode active material layer includes a first negative electrode active material. The negative electrode active material layer includes a first portion, a second portion, and a third portion that are disposed in the first zone, the second zone, and the third zone, respectively. The negative electrode coating layer is located between the third portion and the third zone, or the third portion is located between the negative electrode coating layer and the third zone. Combined impedance of the negative electrode coating layer and the third portion is greater than impedance of the first portion and greater than impedance of the second portion.

In some embodiments, a ratio of the impedance of the first portion to the combined impedance of the negative electrode coating layer and the third portion is 0.5 to 0.99, and a ratio of the impedance of the second portion to the combined impedance of the negative electrode coating layer and the third portion is 0.5 to 0.99. In some embodiments, a ratio of a width of the negative electrode coating layer to a width of the negative electrode active material layer is 0.75 to 0.99. In some embodiments, a thickness of the negative electrode coating layer is greater than 0.5 $\mu$m and less than 8 $\mu$m. In some embodiments, the negative electrode coating layer includes a second binder and at least one selected from the group consisting of conductive carbon or ceramics. In some embodiments, both a thickness of the first portion and a thickness of the second portion are greater than 20 $\mu$m and less than 200 $\mu$m.

In some embodiments, a mass percentage of the first binder in the negative electrode coating layer is greater than 20%. In some embodiments, the first binder includes at least one of polyvinylidene fluoride, a copolymer of vinylidene fluoride-fluorinated olefin, polyvinylpyrrolidone, polyacrylonitrile, polymethyl acrylate, polytetrafluoroethylene, sodium carboxymethyl cellulose, styrene-butadiene rubber, polyurethane, fluorinated rubber, or polyvinyl alcohol. In some embodiments, the conductive carbon includes at least one of conductive carbon black, carbon nanotubes, conductive graphite, graphene, acetylene black, or carbon nanofibers. In some embodiments, a combined thickness of the third portion and the negative electrode coating layer is the same as a thickness of the first portion, and the combined thickness of the third portion and the negative electrode coating layer is the same as a thickness of the second portion.

Some embodiments of this application provide an electronic apparatus, including any one of the foregoing electrochemical apparatuses.

In some embodiments of this application, the positive electrode coating layer is disposed in the positive electrode plate, or the negative electrode coating layer is disposed in the negative electrode plate, which optimizes lithiation uniformity for the electrode plate during charging, alleviates lithium precipitation at the edge of the electrode plate, and enlarges a lithium precipitation window, thereby helping improve rate performance of the electrochemical apparatus.

## BRIEF DESCRIPTION OF DRAWINGS

FIG. 1 is a cross-sectional view of a positive electrode plate 10 of an electrochemical apparatus along a plane defined by its length, width, and thickness directions according to some embodiments of this application.
FIG. 2 is a cross-sectional view of a positive electrode plate 10 of an electrochemical apparatus along a plane defined by its width and thickness directions according to another embodiment of this application.
FIG. 3 is a cross-sectional view of a negative electrode plate 12 of an electrochemical apparatus along a plane defined by its width and thickness directions according to some embodiments of this application.
FIG. 4 is a cross-sectional view of a negative electrode plate 12 of an electrochemical apparatus along a plane defined by its width and thickness directions according to another embodiment of this application.

## DESCRIPTION OF EMBODIMENTS

The following embodiments may enable those skilled in the art to understand this application more comprehensively, but do not limit this application in any way.

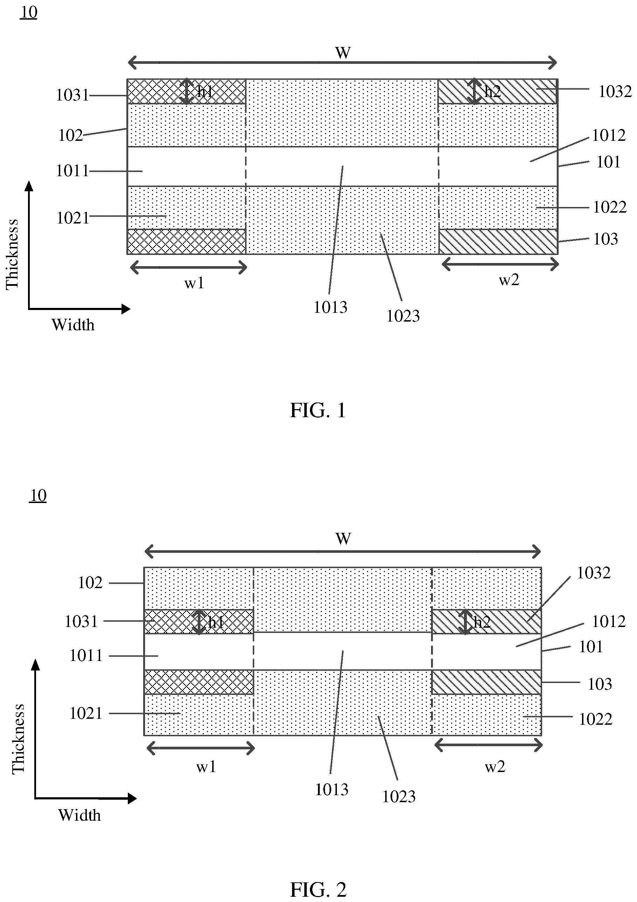

FIG. 1 and FIG. 2 are cross-sectional views of positive electrode plates 10 of electrochemical apparatuses along planes defined by their width and thickness directions according to some embodiments of this application. An embodiment of this application provides an electrochemical apparatus. The electrochemical apparatus includes a positive electrode plate 10 shown in FIG. 1. The positive electrode plate 10 includes a positive electrode current collector 101, a positive electrode active material layer 102, and a positive electrode coating layer 103. It should be understood that the positive electrode active material layer 102 and the positive electrode coating layer 103 being located on two sides of the positive electrode current collector 101 in FIG. 1 is only an example, and the positive electrode active material layer 102 and the positive electrode coating layer 103 may be located on only one side of the current collector 101.

In some embodiments, along a width direction of the positive electrode plate 10, the positive electrode current collector 101 includes a first zone 1011, a second zone 1012, and a third zone 1013 located between the first zone 1011 and the second zone 1012, as shown in FIG. 1. In some embodiments, the positive electrode active material layer 102 includes a first positive electrode active material. The positive electrode active material layer 102 includes a first portion 1021, a second portion 1022, and a third portion 1023 disposed in the first zone 1011, the second zone 1012, and the third zone 1013, respectively. In some embodiments, the positive electrode coating layer 103 may or may not include a second positive electrode active material, and the positive electrode coating layer 103 includes a fourth portion 1031 and a fifth portion 1032 disposed in the first zone 1011 and the second zone 1012, respectively.

In some embodiments, the first portion 1021 is located between the fourth portion 1031 and the first zone 1011, as shown in FIG. 1. In some embodiments, the fourth portion 1031 is located between the first portion 1021 and the first zone 1011, as shown in FIG. 2. In some embodiments, the second portion 1022 is located between the fifth portion 1032 and the second zone 1012, as shown in FIG. 1. In some embodiments, the fifth portion 1032 is located between the second portion 1022 and the second zone 1012, as shown in FIG. 2. Therefore, FIG. 2 has the same details as FIG. 1 except for relative positions of the positive electrode active material layer 102 and the positive electrode coating layer 103. In addition, it should be understood that although the first zone 1011, the second zone 1012, and the third zone 1013 of the positive electrode current collector 101 are divided by dashed lines in FIG. 1, and the first portion 1021, the second portion 1022, and the third portion 1023 of the positive electrode active material layer 102 are divided by dashed line, there may not actually be interfaces, the positive electrode current collector 101 may be continuous on the whole, and the positive electrode active material layer 102 may also be continuous on the whole.

In some embodiments, combined impedance of the first portion 1021 and the fourth portion 1031 is greater than impedance of the third portion 1023, and combined impedance of the second portion 1022 and the fifth portion 1032 is greater than the impedance of the third portion 1023. That is, impedance of an edge zone of the positive electrode plate 10 is greater than impedance of a middle zone of the positive electrode plate 10. In this way, a rate of lithium ion release at the edge zone (for example, a combination of the first portion 1021 and the fourth portion 1031 or a combination of the second portion 1022 and the fifth portion 1032) of the positive electrode plate 10 can be decreased, thereby reducing charge current density in the edge zone during charging. An edge of a corresponding negative electrode plate is more susceptible to lithium precipitation. Reduced charge current density in the edge zone can optimize lithiation uniformity of the corresponding negative electrode plate during charging, which alleviates lithium precipitation at the edge of the negative electrode plate and enlarges a lithium precipitation window, thereby helping improve rate performance of the electrochemical apparatus.

An impedance test method is as follows: Both direct current impedance and alternating current impedance are suitable for test, provided that measured impedance falls within the foregoing impedance range. A specific impedance test method is described as follows. Direct current impedance test: A corresponding zone to be tested (when combined impedance of two portions is to be measured, the two parts are taken for test) is taken to serve as a positive electrode, so as to assemble a lithium-ion battery. The battery is placed on a Neware battery tester to be charged and discharged, and voltage and current of the lithium-ion battery is monitored to obtain direct current impedance of the lithium-ion battery. Specifically, the lithium-ion battery is charged to a full charge voltage at a constant current of 0.5C, then charged to 0.05C at a constant voltage, and discharged at a current of 1C for 30 min to make the lithium-ion battery in a 50% state of charge, and a voltage V1 is recorded. The battery is left to stand for 60 min, and a voltage V2 is recorded. The battery is discharged for 10s at a current of 0.1C, and a voltage V3 is recorded. Then the battery is discharged for 1s at a current of 1C, and a voltage V4 is recorded. A direct current impedance $R_T$ and DCR of the lithium-ion battery are calculated according to the following formulas:

$$R_T=(V2-V1)/1C, \text{ and } DCR=(V3-V4)/(1C-0.1C)$$

Alternating current impedance test method: A corresponding zone is taken to make into a symmetrical battery, that is, a battery with positive electrode plate to positive electrode plate and negative electrode plate to negative electrode plate. An EIS test is carried out on the symmetric battery by using an electrochemical workstation, with a test temperature being 25°C, a test frequency range being 30 mHz to 500 kHz, and a disturbance voltage being 5 mV. After an EIS spectrum is obtained, alternating current impedance Rz of the symmetrical battery is read from the spectrum.

In some embodiments, a ratio of the combined impedance of the fourth portion 1031 and the first portion 1011 to the impedance of the third portion 1023 is 1.02 to 5. In some embodiments, a ratio of the combined impedance of the fifth portion 1032 and the second portion 1022 to the impedance of the third portion 1023 is 1.02 to 5. That is, a ratio of the impedance of the edge zone to the impedance of the middle zone of the positive electrode plate 10 is 1.02 to 5. An excessively large difference between the impedance of the edge zone and that of the middle zone affects rate performance of the middle zone (that is, the third portion 1023), which may affect improvement of overall rate performance of the electrochemical apparatus.

In some embodiments, a ratio of a width w1 of the fourth portion 1031 to a width W of the positive electrode active material layer 102 is 0.01 to 0.25. In some embodiments, a ratio of a width w2 of the fifth portion 1032 to the width W of the positive electrode active material layer 102 is 0.01 to 0.25. If the ratio is too small, the fourth portion 1031 or the fifth portion 1032 alleviates lithium precipitation to a limited extent. If the ratio is too large, overall impedance of the positive electrode plate 10 may be excessively increased, which does not help improve rate performance of the electrochemical apparatus. In some embodiments, the width w1 of the fourth portion 1031 and the width w2 of the fifth portion 1032 are the same (as in the following specific embodiments), but this application is not limited thereto. The width w1 and the width w2 may alternatively be different. It should be understood that due to existence of errors, "the same" herein means a difference of no more than 5%.

In some embodiments, a thickness h1 of the fourth portion 1031 is greater than 0.5 $\mu$m and less than 8 $\mu$m. In some embodiments, a thickness h2 of the fifth portion 1032 is greater than 0.5 $\mu$m and less than 8 $\mu$m. If the thickness h1 of the fourth portion 1031 or the thickness h2 of the fifth portion 1032 is too small, the fourth portion 1031 or the fifth portion 1032 alleviates lithium precipitation to a limited extent. If the thickness h1 of the fourth portion 1031 or the thickness h2 of the fifth portion 1032 is too large, overall impedance of the positive electrode plate 10 may be excessively increased, which does not help improve rate performance of the electrochemical apparatus. In some embodiments, the thickness h1 of the fourth portion 1031 and the thickness h2 of the fifth portion 1032 are the same (as in the following specific embodiments), but this application is not limited thereto. The thickness h1 and the thickness h2 may alternatively be different. It should be understood that due to existence of errors, "the same" herein means a difference of no more than 5%.

In some embodiments, a thickness of the third portion 1023 is greater than 20 $\mu$m and less than 200 $\mu$m. If the thickness of the third portion 1023 is too small, it is unfavorable to increase energy density of the electrochemical apparatus. If the thickness of the third portion 1023 is too large, a part of the positive electrode active material layer 102 close to the positive electrode current collector 101 has a relatively long lithium ion transport path, which does not help improve rate performance of electrochemical apparatus.

In some embodiments, the positive electrode coating layer 103 includes a first binder and at least one of conductive carbon, ceramics, or lithium iron phosphate. The conductive carbon helps to improve conductivity of the positive electrode coating layer 103. The ceramics helps to improve structural strength of the positive electrode coating layer 103. Lithium iron phosphate is a positive electrode active material and helps to increase energy density of electrochemical apparatus. The presence of the first binder in the positive electrode coating layer 103 helps to bind various materials in the positive electrode coating layer 103 together.

In some embodiments, a mass percentage of the first binder in the positive electrode coating layer 103 is greater than 20%. In this way, structural stability of the positive electrode coating layer 103 can be improved, and the positive electrode coating layer 103 is not prone to film peeling. In some embodiments, the first binder includes at least one of polyvinylidene fluoride, a copolymer of vinylidene fluoride-fluorinated olefin, polyvinylpyrrolidone, polyacrylonitrile, polymethyl acrylate, polytetrafluoroethylene, sodium carboxymethyl cellulose, styrene-butadiene rubber, polyurethane, fluorinated rubber, or polyvinyl alcohol. In some embodiments, the conductive carbon includes at least one of conductive carbon black, carbon nanotubes, conductive graphite, graphene, acetylene black, or carbon nanofibers.

In some embodiments, a combined thickness of the first portion 1021 and the fourth portion 1031 is the same as a thickness of the third portion 1023. In some embodiments, a combined thickness of the second portion 1022 and the fifth portion 1032 is the same as the thickness of the third portion 1023. It should be understood that due to existence of errors, "the same" herein means a difference of no more than 5%. In this way, a combined thickness of the positive electrode active material layer 102 and the positive electrode coating layer can be uniform on the whole, which facilitates subsequent processing such as winding or stacking of the electrochemical apparatus. In some embodiments, the positive electrode active material layer 102 with a uniform thickness may be formed on the positive electrode current collector 101, and after the positive electrode coating layer 103 is formed, cold pressing is performed to make the combined thickness of the positive electrode active material layer 102 and the positive electrode coating layer 103 be uniform on the whole, but some zones where the positive electrode active material layer 102 and the positive electrode coating layer 103 are present have a greater compacted density than a zone where only the positive electrode active material layer 102 is present.

In some embodiments, the first positive electrode active material and the second positive electrode active material may each independently include at least one of lithium cobalt oxide, lithium nickel cobalt manganate, lithium nickel cobalt aluminate, or lithium manganate. In some embodiments, the positive electrode active material layer 102 may further include a conductive agent and a binder. The conductive agent in the positive electrode active material layer 102 may include at least one of conductive carbon black, Ketjen black, lamellar graphite, graphene, carbon nanotubes, or carbon fibers. The binder in the positive electrode active material layer 102 may include at least one of carboxymethyl cellulose (CMC), polyacrylic acid, polyvinylpyrrolidone, polyaniline, polyimide, polyamideimide, polysiloxane, styrene-butadiene rubber, epoxy resin, polyester resin, polyurethane resin, or polyfluorene. In some embodiments, a mass ratio of the positive electrode active material to the conductive agent to the first binder in the positive electrode active material layer 102 may be (80-99):(0.1-10):(0.1-10). In some embodiments, the positive electrode coating layer 103 may include the conductive agent (for example, conductive carbon) and the first binder, a mass percentage of the conductive agent in the positive electrode coating layer 103 is 30% to 80%, and a mass percentage of the first binder in the positive electrode coating layer 103 may be 20% to 70%. It should be understood that the descriptions above are merely examples, and any other suitable material, thickness, and mass ratio may be adopted for the positive electrode active material layer 102.

In some embodiments, the positive electrode current collector may be made of Al foil, or may be another current collector commonly used in the art. In some embodiments, a thickness of the positive electrode current collector may be 1 $\mu$m to 50 $\mu$m.

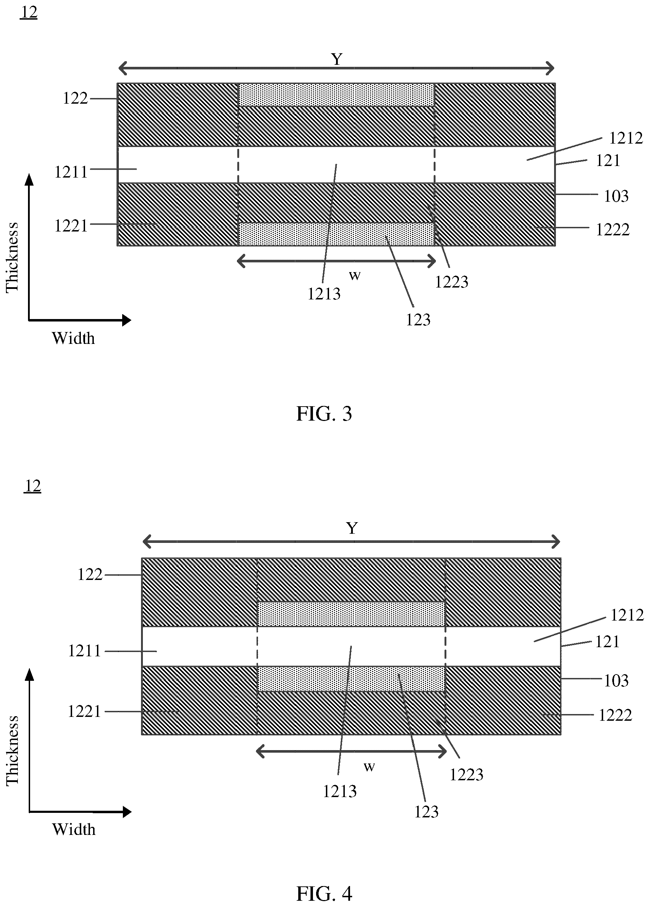

As shown in FIG. 3, another embodiment of this application provides an electrochemical apparatus. The electrochemical apparatus includes a negative electrode plate 12. The negative electrode plate 12 includes a negative electrode current collector 121, a negative electrode active material layer 122, and a negative electrode coating layer 123. It should be understood that the negative electrode active material layer 122 and the negative electrode coating layer 123 being located on two sides of the negative electrode current collector 121 in FIG. 1 is only an example, and the negative electrode active material layer 122 and the negative electrode coating layer 123 may be located on only one side of the negative electrode current collector 121.

In some embodiments, along a width direction of the negative electrode plate 12, the negative electrode current collector 121 includes a first zone 1211, a second zone 1212, and a third zone 1213 located between the first zone 1211 and the second zone 1212. In some embodiments, the negative electrode active material layer 122 includes a first negative electrode active material. The negative electrode active material layer 122 includes a first portion 1221, a second portion 1222, and a third portion 1223 disposed in the first zone 1211, the second zone 1212, and the third zone 1213, respectively. In some embodiments, the negative electrode coating layer 123 may or may not include a second negative electrode active material.

In some embodiments, the third portion 1223 is located between the negative electrode coating layer 123 and the third zone 1213, as shown in FIG. 3. In some embodiments, the negative electrode coating layer 123 is located between the third portion 1223 and the third zone 1213, as shown in FIG. 4. Therefore, FIG. 4 has the same details as FIG. 3 except for relative positions of the negative electrode active material layer 122 and the negative electrode coating layer 123. In addition, it should be understood that although the first zone 1211, the second zone 1212, and the third zone 1213 of the negative electrode current collector 121 are divided by dashed lines in FIG. 3, and the first portion 1221, the second portion 1222, and the third portion 1223 of the negative electrode active material layer 122 are divided by dashed line, there may not actually be interfaces, the negative electrode current collector 121 may be continuous on the whole, and the negative electrode active material layer 122 may also be continuous on the whole.

In some embodiments, combined impedance of the negative electrode coating layer 123 and the third portion 1223 is greater than impedance of the first portion 1221 and greater than impedance of the second portion 1222. That is, impedance of an edge zone of the negative electrode plate 12 is less than impedance of a middle zone of the negative electrode plate 12. In this way, the edge zone of the negative electrode plate 12 (for example, the first portion 1221 or the second portion 1222) can have a higher intercalation rate of lithium ions than the middle zone of the negative electrode plate 12 (for example, a combination of the third portion 1223 and the negative electrode coating layer 123). The edge zone of the negative electrode plate is more susceptible to lithium precipitation. The increased intercalation rate of lithium ions in the edge zone of the negative electrode plate optimizes lithiation uniformity of the negative electrode plate 12 during charging, which alleviates lithium precipitation at the edge of the negative electrode plate and enlarges a lithium precipitation window, thereby helping improve rate performance of the electrochemical apparatus.

In some embodiments, a ratio of the impedance of the first portion 1221 to the combined impedance of the negative electrode coating layer 123 and the third portion 1223 is 0.5 to 0.99. In some embodiments, a ratio of the impedance of the second portion 1222 to the combined impedance of the negative electrode coating layer 123 and the third portion 1223 is 0.5 to 0.99. If the ratio is too small, lithium precipitation in the edge zone of the negative electrode plate 12 is alleviated to a limited extent.

In some embodiments, a ratio of a width w of the negative electrode coating layer 123 to a width Y of the negative electrode active material layer 122 is 0.75 to 0.99. If the ratio is too small, the negative electrode coating layer 123 alleviates lithiation uniformity to a limited extent.

In some embodiments, a thickness of the negative electrode coating layer 123 is greater than 0.5 $\mu$m and less than 8 $\mu$m. If the thickness of the negative electrode coating layer 123 is too small, the negative electrode coating layer 123 alleviates lithiation uniformity to a limited extent. If the thickness of the negative electrode coating layer 123 is too large, overall impedance of the negative electrode plate 12 is heavily affected, which affects overall rate performance of the electrochemical apparatus.

In some embodiments, the negative electrode coating layer 123 includes a second binder and at least one selected from the group consisting of conductive carbon or ceramics. The conductive carbon helps to improve conductivity of the negative electrode coating layer 123. The ceramics helps to improve structural strength of the negative electrode coating layer 123. The presence of the second binder in the negative electrode coating layer 123 helps to bind various materials in the negative electrode coating layer 123 together. In some embodiments, a mass percentage of the second binder in the negative electrode coating layer 123 is greater than 20%. If the mass percentage of the second binder in the negative electrode coating layer 123 is too small, it is unfavorable to help to increase a binding force of the negative electrode coating layer 123, resulting that the negative electrode coating layer 123 is prone to film peeling. In some embodiments, the second binder includes at least one of polyvinylidene fluoride, a copolymer of vinylidene fluoride-fluorinated olefin, polyvinylpyrrolidone, polyacrylonitrile, polymethyl acrylate, polytetrafluoroethylene, sodium carboxymethyl cellulose, styrene-butadiene rubber, polyurethane, fluorinated rubber, or polyvinyl alcohol. In some embodiments, the conductive carbon in the negative electrode coating layer 123 includes at least one of conductive carbon black, carbon nanotubes, conductive graphite, graphene, acetylene black, or carbon nanofibers.

In some embodiments, both a thickness of the first portion 1221 and a thickness of the second portion 1222 are greater than 20 $\mu$m and less than 200 $\mu$m. If the thickness of the first portion 1221 or the second portion 1222 is too small, that is, a thickness of the negative electrode active material layer 122 is too small, it is unfavorable to increase energy density of the electrochemical apparatus. If the thickness of the negative electrode active material layer 122 is too large, a part of the negative electrode active material layer 122 close to the negative electrode current collector 121 has a relatively long lithium ion transport path, which does not help improve rate performance of electrochemical apparatus.

In some embodiments, a combined thickness of the third portion 1223 and the negative electrode coating layer 123 is the same as the thickness of the first portion 1221. In some embodiments, the combined thickness of the third portion 1223 and the negative electrode coating layer 123 is the same as a thickness of the second portion 1222. It should be understood that due to presence of errors, "the same" herein means a difference of no more than 5%. In this way, a combined thickness of the negative electrode active material layer 122 and the negative electrode coating layer 123 may be uniform on the whole, which facilitates subsequent processing such as winding or stacking of the electrochemical apparatus. In some embodiments, the negative electrode active material layer 122 with a uniform thickness may be formed on the negative electrode current collector 121, and after the negative electrode coating layer 123 is formed, cold pressing is performed to make the combined thickness of the negative electrode active material layer 122 and the negative electrode coating layer 123 be uniform on the whole, but some zones where the negative electrode active material layer 122 and the negative electrode coating layer 123 are present have a greater compacted density than a zone where only the negative electrode active material layer 122 is present.

In some embodiments, the first negative electrode active material and the second negative electrode active material may each independently include at least one of graphite, hard carbon, silicon, silicon monoxide, or silicone. In some embodiments, the negative electrode active material layer 122 may further include a conductive agent and a binder. The conductive agent in the negative electrode active material layer 122 may include at least one of conductive carbon black, Ketjen black, lamellar graphite, graphene, carbon nanotubes, or carbon fibers. The binder in the negative electrode active material layer 122 may include at least one of carboxymethyl cellulose (CMC), polyacrylic acid, polyvinylpyrrolidone, polyaniline, polyimide, polyamideimide, polysiloxane, styrene-butadiene rubber, epoxy resin, polyester resin, polyurethane resin, or polyfluorene. In some embodiments, a mass ratio of the negative electrode active material to the conductive agent to the binder in the negative electrode active material layer 122 may be (80-99):(0.1-10):(0.1-10). It should be understood that the descriptions above are merely examples, and any other suitable material, thickness, and mass ratio may be adopted for the negative electrode active material layer 122. In some embodiments, the negative electrode coating layer 123 may include the conductive agent (for example, conductive carbon) and the second binder, a mass percentage of the conductive agent in the negative electrode coating layer 123 is 30% to 80%, and a mass percentage of the second binder in the negative electrode coating layer 123 is 20% to 70%.

In some embodiments, for the negative electrode current collector, at least one of copper foil, nickel foil, or carbon-based current collectors may be used. In some embodiments, a thickness of the negative electrode current collector may be 1 $\mu$m to 50 $\mu$m.

In some embodiments, the electrochemical apparatus may further include a separator disposed between a positive electrode plate and the negative electrode plate. In some embodiments, the separator includes at least one of polyethylene, polypropylene, polyvinylidene fluoride, polyethylene terephthalate, polyimide, or aramid. For example, polyethylene includes at least one of high-density polyethylene, low-density polyethylene, or ultra-high-molecular-weight polyethylene. Particularly, polyethylene and polypropylene have a good effect on preventing short circuits, and can improve the stability of a battery through a shutdown effect. In some embodiments, a thickness of the separator is in a range of about 5 $\mu$m to 50 $\mu$m.

In some embodiments, a surface of the separator may further include a porous layer. The porous layer is disposed on at least one surface of the separator and includes inorganic particles and a binder, where the inorganic particles are selected from at least one of aluminum oxide ($Al_2O_3$), silicon dioxide ($SiO_2$), magnesium oxide (MgO), titanium oxide ($TiO_2$), hafnium dioxide ($HfO_2$), stannic oxide ($SnO_2$), cerium dioxide ($CeO_2$), nickel oxide (NiO), zinc oxide (ZnO), calcium oxide (CaO), zirconium dioxide ($ZrO_2$), yttrium oxide ($Y_2O_3$), silicon carbide (SiC), boehmite, aluminum hydroxide, magnesium hydroxide, calcium hydroxide, or barium sulfate. In some embodiments, pores of the separator have a diameter ranging from about 0.01 $\mu$m to 1 $\mu$m. The binder in the porous layer is selected from at least one of polyvinylidene fluoride, vinylidene fluoride-hexafluoropropylene copolymer, polyamide, polyacrylonitrile, polyacrylic ester, polyacrylic acid, a polyacrylic salt, carboxyl methyl cellulose, polyvinylpyrrolidone, polyvinyl ether, polymethyl methacrylate, polytetrafluoroethylene, or polyhexafluoropropylene. The porous layer on the surface of the separator can improve heat resistance and oxidation resistance of the separator, and electrolyte infiltration performance, and enhance adhesion between the separator and the electrode plate.

In some embodiments, the electrochemical apparatus includes a lithium-ion battery. However, this application is not limited thereto. In some embodiments, the electrochemical apparatus may further include an electrolyte. The electrolyte may be one or more of a gel electrolyte, a solid electrolyte, and a liquid electrolyte. The liquid electrolyte includes a lithium salt and a non-aqueous solvent. The lithium salt is selected from one or more of $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, LiBOB, or lithium difluoroborate. For example, $LiPF_6$ is selected as the lithium salt because it provides a high ionic conductivity and can improve cycling performance.

The non-aqueous solvent may be a carbonate compound, a carboxylate compound, an ether compound, another organic solvent, or a combination thereof.

The carbonate compound may be a linear carbonate compound, a cyclic carbonate compound, a fluorocarbonate compound, or a combination thereof.

An example of the linear carbonate compound is diethyl carbonate (DEC), dimethyl carbonate (DMC), dipropyl carbonate (DPC), methyl propyl carbonate (MPC), ethyl propyl carbonate (EPC), methyl ethyl carbonate (MEC), or a combination thereof. An example of the cyclic carbonate compound is ethylene carbonate (EC), propylene carbonate (PC), butylene carbonate (BC), vinyl ethylene carbonate (VEC), or a combination thereof. An example of the fluorocarbonate compound is fluoroethylene carbonate (FEC), 4,5-difluoro-1,3-dioxolan-2-one, 4,4-difluoro-1,3-dioxolan-2-one, 4,4,5-trifluoro-1,3-dioxolan-2-one, 4,4,5,5-tetrafluoro-1,3-dioxolan-2-one, 4-fluoro-5-methyl-1,3-dioxolan-2-one, 4-fluoro-4-methyl-1,3-dioxolan-2-one, 4,5-difluoro-4-methyl-1,3-dioxolan-2-one, 4,4,5-trifluoro-5-methyl-1,3-dioxolan-2-one, 4-(trifluoromethyl)-1,3-dioxolan-2-one, or a combination thereof.

An example of the carboxylate compound is methyl acetate, ethyl acetate, n-propyl acetate, tert-butyl acetate, methyl propionate, ethyl propionate, propyl propionate, $\gamma$-butyrolactone, decanolide, valerolactone, mevalonolactone, caprolactone, methyl formate, or a combination thereof.

An example of the ether compound is dibutyl ether, tetraglyme, diglyme, 1,2-dimethoxyethane, 1,2-diethoxyethane, ethoxymethoxy ethane, 2-methyltetrahydrofuran, tetrahydrofuran, or a combination thereof.

An example of the another organic solvent is dimethyl sulfoxide, 1,2-dioxolane, sulfolane, methyl sulfolane, 1,3-dimethyl-2-imidazolidinone, N-methyl -2-pyrrolidone, formamide, dimethylformamide, acetonitrile, trimethyl phosphate, triethyl phosphate, trioctyl phosphate, phosphate ester, or a combination thereof.

In some embodiments of this application, a lithium-ion battery is used as an example. A positive electrode plate, a separator, and a negative electrode plate are wound or stacked in sequence to form an electrode assembly, and the electrode assembly is then packaged in an aluminum-plastic film, followed by injection of an electrolyte, formation, and packaging to obtain a lithium-ion battery. An embodiment of this application further provides an electronic apparatus, including the foregoing electrochemical apparatus. The electronic apparatus according to this embodiment of this application is not particularly limited, and may be any known electronic apparatus used in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a bicycle, a lighting appliance, a toy, a game console, a clock, an electric tool, a flash lamp, a camera, a large household battery, a lithium-ion capacitor, or the like.

Some specific examples and comparative examples are listed below to better illustrate this application. Lithium-ion batteries are used as examples.

Example 1

Preparation of positive electrode plate: A positive electrode active material lithium cobaltate, a conductive agent, and a binder polyvinylidene fluoride (PVDF) were dissolved in an N-methylpyrrolidone (NMP) solution at a weight ratio of 97.6:1.1:1.3, to obtain a positive electrode active material layer slurry. An aluminum foil was used as a positive electrode current collector. The positive electrode active material layer slurry was applied on the positive electrode current collector, with a coating thickness of 50 $\mu$m and an electrode plate width of 100 mm. A binder polyvinylidene fluoride (PVDF) and conductive carbon black were dissolved in an N-methylpyrrolidone (NMP) solution at a ratio of 6:4, to obtain a positive electrode coating layer slurry. Coating was performed at two edges of an electrode plate to obtain a positive electrode coating layer, with a coating width of 5 mm and a coating thickness of 3 $\mu$m. Drying, cold pressing, and cutting were then performed to obtain a positive electrode plate.

Preparation of negative electrode plate: A negative electrode active material artificial graphite, conductive carbon, and a binder styrene-butadiene rubber were dissolved in deionized water at a weight ratio of 97.5:0.5:2 to obtain a negative electrode active material layer slurry. A copper foil was used as a negative electrode current collector. The negative electrode active material layer slurry was applied on the negative electrode current collector, with a coating thickness of 60 $\mu$m and an electrode plate width of 100 mm. Drying, cold pressing, and cutting were then performed to obtain a negative electrode plate.

Preparation of separator: Polyethylene (PE) with a thickness of 8 $\mu$m was used as a substrate of a separator, two sides of the substrate of the separator each were coated with a 2 $\mu$m aluminum oxide ceramic layer, and finally, the two sides coated with the ceramic layers each were coated with binder polyvinylidene fluoride (PVDF), with a coating weight of 2.5mg/cm$^2$. Then drying was performed.

Preparation of electrolyte: In an environment with a moisture content less than 10 ppm, lithium hexafluorophosphate and non-aqueous organic solvents (ethylene carbonate (EC):propylene carbonate (PC):polypropylene (PP):diethyl carbonate (DEC)=1:1:1:1 by weight) were used to prepare a base electrolyte, with a concentration of LiPF$_6$ being 1.15 mol/L.

Preparation of lithium-ion battery: The positive electrode plate, the separator, and the negative electrode plate were stacked in sequence, so that the separator was disposed between the positive electrode plate and the negative electrode plate for separation, and winding was performed to obtain an electrode assembly. The electrode assembly was placed in an outer packing aluminum-plastic film, and dried at 80°C. Then, the foregoing electrolyte was injected, and packaging was performed, followed by processes such as formation, degassing, and trimming, to obtain a lithium-ion battery.

For other examples and comparative examples, parameters are changed based on the steps in Example 1 or 12, and specific changed parameters are described below.

In Comparative Example 1, no positive electrode coating layer was applied. Examples 2 to 5 were different from Example 1 in impedance ratio R$_{(1031+1021)}$/R$_{1023}$. In the examples, the impedance ratios R$_{(1031+1021)}$/R$_{1023}$ could be changed by adjusting binder contents. Examples 6 to 8 were different from Example 1 in impedance ratio R$_{(1031+1021)}$/R$_{1023}$ and width of positive electrode coating layer. Examples 9 to 11 were different from Example 1 in impedance ratio R$_{(1031+1021)}$/R$_{1023}$ and thickness of positive electrode coating layer.

In Example 12, no positive electrode coating layer is applied, and preparation of negative electrode plate was different that in Example 1.

Preparation of negative electrode plate: A negative electrode active material artificial graphite, conductive carbon, and a binder styrene-butadiene rubber were dissolved in deionized water at a weight ratio of 97.5:0.5:2 to obtain a negative electrode active material layer slurry. A copper foil was used as a negative electrode current collector. The negative electrode active material layer slurry was applied on the negative electrode current collector, with a coating thickness of 50 $\mu$m and an electrode plate width of 100 mm. A binder sodium carboxymethyl cellulose, styrene-butadiene rubber, and conductive carbon black were dissolved in water at a ratio of 5:90:5 to obtain a negative electrode coating layer slurry. The negative electrode coating layer slurry was applied on a negative electrode active material layer, with a coating width of 90 mm. Coating was performed at the middle of an electrode plate, with a distance to both the left and right sides of 5 mm, and a coating thickness of 2 $\mu$m. After coating was performed, drying and cold pressing were then performed to obtain a negative electrode plate.

Examples 13 and 14 were the same as Example 12 in parameters except for impedance ratio R$_{1221}$/R$_{(1223+123)}$. Examples 15 and 16 were different from Example 12 in width of negative electrode coating layer. Examples 17 to 19 were different from Example 12 in thickness of negative electrode coating layer.

The following describes methods for testing various parameters in this application.

Lithium precipitation window test:

An electrochemical apparatus was first discharged to a full discharge state, and then a specified temperature (for example, 25°C) was set. Based on a design of the electrochemical apparatus, conventional charging (constant current + constant voltage) was performed at different rates, such as 1C, 1.1C, 1.2C.... To be specific, the apparatus was charged to a cut-off voltage of a battery at a specified rate, then charged to 0.05C at a constant voltage, and then fully discharged at 0.2C. The above charge and discharge procedure was repeated 10 times. Finally, the electrochemical apparatus was fully charged and then disassembled to observe whether lithium precipitation occurred at a negative electrode plate. A maximum current without causing lithium precipitation (there was no white spot on a surface of the negative electrode plate) was defined as a maximum lithium-precipitation-free rate of the battery, namely, a lithium precipitation window.

Full charge time test:

A lithium-ion battery to be tested was left standing for 30 minutes in a 25°C environment, charged to a rated voltage at a constant current of 0.5C rate, and charged at a constant voltage charge until a charge/discharge rate reached 0.05C. A duration between a time when charging started and a time when charging stopped was a full charge time.

Energy density test:

Battery energy test: A lithium-ion battery to be tested was left standing for 30 minutes in a 25°C environment, charged to a rated voltage at a constant current of 0.5C rate, and charged at a constant voltage charge until a charge/discharge rate reached 0.05C, and an electrochemical apparatus to be tested was left standing for 30 minutes. The battery was then discharged to 3.0 V at a rate of 0.2C, and the lithium-ion battery to be tested was left standing for 30 minutes. Finally, a discharge capacity was used as an actual battery capacity C of the battery. A length, width, and height of the tested lithium-ion battery were L, W, and H respectively, a discharge platform voltage of the battery was V, and energy density of the battery was $VED = C \times V/(L \times W \times H)$.

Table 1 shows various parameters and evaluation results in corresponding Examples 1 to 19 and Comparative Example 1.

**Table 1**

| | Positive electrode plate adjustment | | | Negative electrode plate adjustment | | | Lithium precipitation window (25°C) | Full charge time (min) | Energy density (Wh/L) |
|---|---|---|---|---|---|---|---|---|---|
| | Impedance ratio $R_{(1031+1021)}/R_{1023}$ | Width ratio w1/W | Thickness of positive electrode coating layer h1 (μm) | Impedance ratio $R_{1221}/R_{(1223+123)}$ | Width ratio w/Y | Thickness of negative electrode coating layer (μm) | | | |
| Comparative example 1 | 1 | 0 | 0 | 1 | 0 | 0 | 1.5C | 78 | 730 |
| Example 1 | 1.02 | 5 % | 3 | 1 | 0 | 0 | 1.6C | 78 | 730 |
| Example 2 | 1.10 | 5 % | 3 | 1 | 0 | 0 | 1.9C | 78 | 730 |
| Example 3 | 2.00 | 5 % | 3 | 1 | 0 | 0 | 2.0C | 78 | 730 |
| Example 4 | 5.00 | 5% | 3 | 1 | 0 | 0 | 2.0C | 79 | 720 |
| Example 5 | 8.00 | 5% | 3 | 1 | 0 | 0 | 2.0C | 82 | 700 |
| Example 6 | 2.00 | 1% | 3 | 1 | 0 | 0 | 1.6C | 78 | 730 |
| Example 7 | 2.00 | 25% | 3 | 1 | 0 | 0 | 2.0C | 80 | 720 |
| Example 8 | 2.00 | 30% | 3 | 1 | 0 | 0 | 2.0C | 82 | 690 |
| Example 9 | 2.00 | 5% | 0.5 | 1 | 0 | 0 | 1.9C | 78 | 730 |
| Example 10 | 2.00 | 5% | 8 | 1 | 0 | 0 | 2.0C | 78 | 720 |
| Example 11 | 2.00 | 5% | 10 | 1 | 0 | 0 | 2.0C | 78 | 715 |
| Example 12 | 1 | 0 | 0 | 0.5 | 90% | 2 | 1.8C | 79 | 715 |
| Example 13 | 1 | 0 | 0 | 0.8 | 90% | 2 | 1.8C | 78 | 720 |
| Example 14 | 1 | 0 | 0 | 0.99 | 90% | 2 | 1.6C | 78 | 730 |
| Example 15 | 1 | 0 | 0 | 0.8 | 75% | 2 | 1.7C | 78 | 720 |
| Example 16 | 1 | 0 | 0 | 0.8 | 99% | 2 | 1.8C | 79 | 720 |
| Example 17 | 1 | 0 | 0 | 0.8 | 90% | 0.5 | 1.8C | 79 | 730 |
| Example 18 | 1 | 0 | 0 | 0.8 | 90% | 8 | 1.8C | 79 | 715 |
| Example 19 | 1 | 0 | 0 | 0.8 | 90% | 10 | 1.8C | 79 | 700 |

It can be learned from comparison between Example 1 and Comparative Example 1 that a formed positive electrode coating layer could help improve a charge capability of an electrochemical apparatus and that a full charge time and an energy density of the electrochemical apparatus remained basically unchanged. Similarly, it can be learned from comparison between Example 14 and Comparative Example 1 that a formed negative electrode coating layer could help improve a charge capability of an electrochemical apparatus and that a full charge time and an energy density of the electrochemical apparatus remained basically unchanged.

It can be learned from comparison between Examples 1 to 5 that with an increase in an impedance ratio $R_{(1031+1021)}/R_{1023}$, a charge capability of an electrochemical apparatus increased first and then remained unchanged, a full charge time of the electrochemical apparatus remained unchanged first and then increased, and an energy density of the electrochemical apparatus remained unchanged first and then decreased. When the impedance ratio $R_{(1031+1021)}/R_{1023}$ was greater than 5, the charge capability no longer increased, but the full charge time increased and the energy density decreased.

It can be learned from comparison between Examples 6 to 8 that with an increase in a width of a positive electrode coating layer, a charge capability of an electrochemical apparatus increased first and then remained unchanged, a full charge time of the electrochemical apparatus exhibited an increase trend, and an energy density of the electrochemical apparatus exhibited a decrease trend. When a ratio of the width of the positive electrode coating layer to a width of a positive electrode active material layer was greater than 0.25, the charge capability of the electrochemical apparatus remained basically unchanged, the full charge time of the electrochemical apparatus increased, and the energy density of the electrochemical apparatus decreased.

It can be learned from comparison between Examples 9 to 11 that with an increase in a thickness of a positive electrode coating layer, a charge capability of an electrochemical apparatus increased first and then remained unchanged, a full charge time of the electrochemical apparatus remained basically unchanged, and an energy density of the electrochemical apparatus exhibited a decrease trend. When a thickness of the positive electrode coating layer was greater than 8 $\mu$m, the charge capability and the full charge time of the electrochemical apparatus remained basically unchanged, and the energy density of the electrochemical apparatus decreased.

It can be learned from comparison between Examples 12 to 14 that with an increase in an impedance ratio $R_{1221}/R_{(1223+123)}$, a charge capability of an electrochemical apparatus decreased, a full charge time of the electrochemical apparatus decreased to some extent, and an energy density of the electrochemical apparatus exhibited an increase trend.

It can be learned from comparison between Examples 15 and 16 that with an increase in a width of a negative electrode coating layer, a charge capability of an electrochemical apparatus increased, a full charge time of the electrochemical apparatus increased a bit, and an energy density of the electrochemical apparatus remained basically unchanged. When a ratio of the width of the negative electrode coating layer to a width of a negative electrode active material layer was less than 0.75 or greater than 0.99, the charge capability of the electrochemical apparatus decreased.

It can be learned from comparison between Examples 17 to 19 that with an increase in a thickness of a negative electrode coating layer, a charge capability and a full charge time of an electrochemical apparatus remained basically unchanged, and an energy density of the electrochemical apparatus exhibited a decrease trend. When a ratio of the thickness of the positive electrode coating layer was greater than 8 $\mu$m, the charge capability and the full charge time of the electrochemical apparatus remained basically unchanged, and the energy density of the electrochemical apparatus decreased.

The above descriptions are only preferred embodiments of this application and explanations of the applied technical principles. Those skilled in the art should understand that the scope disclosed in this application is not limited to the technical solutions formed by the specific combination of the above technical features, and should also cover other technical solutions formed by any combination of the above technical features or their equivalent features, for example, a technical solution formed by replacement between the above features and technical features having similar functions disclosed in this application.

**Claims**

1. An electrochemical apparatus comprising a positive electrode plate, wherein the positive electrode plate comprises:

   a positive electrode current collector, wherein along a width direction of the positive electrode plate, the positive electrode current collector comprises a first zone, a second zone, and a third zone located between the first zone and the second zone;
   a positive electrode active material layer, wherein the positive electrode active material layer comprises a first portion, a second portion, and a third portion that are disposed in the first zone, the second zone, and the third zone, respectively; and
   a positive electrode coating layer, wherein the positive electrode coating layer comprises a fourth portion and a fifth portion that are disposed in the first zone and the second zone, respectively,
wherein the fourth portion is located between the first portion and the first zone, or the first portion is located between the fourth portion and the first zone,
the fifth portion is located between the second portion and the second zone, or the second portion is located between the fifth portion and the second zone, and
combined impedance of the first portion and the fourth portion is greater than impedance of the third portion, and combined impedance of the second portion and the fifth portion is greater than the impedance of the third portion.

2. The electrochemical apparatus according to claim 1, wherein the positive electrode plate satisfies at least one of the characteristics from the group consisting of:

a ratio of the combined impedance of the fourth portion and the first portion to the impedance of the third portion being 1.02 to 5, and a ratio of the combined impedance of the fifth portion and the second portion to the impedance of the third portion being 1.02 to 5;
a ratio of a width of the fourth portion to a width of the positive electrode active material layer being 0.01 to 0.25, and a ratio of a width of the fifth portion to the width of the positive electrode active material layer being 0.01 to 0.25;
a thickness of the fourth portion being greater than 0.5 $\mu$m and less than 8 $\mu$m;
a thickness of the fifth portion being greater than 0.5 $\mu$m and less than 8 $\mu$m; and
a thickness of the third portion being greater than 20 $\mu$m and less than 200 $\mu$m.

3. The electrochemical apparatus according to claim 1, wherein
the positive electrode coating layer comprises a first binder and at least one selected from the group consisting of conductive carbon and ceramics.

4. The electrochemical apparatus according to claim 3, wherein the positive electrode plate satisfies at least one of the characteristics from the group consisting of:

a mass percentage of the first binder in the positive electrode coating layer being greater than 20%;
the first binder comprising at least one selected from the group consisting of polyvinylidene fluoride, a copolymer of vinylidene fluoride-fluorinated olefin, polyvinylpyrrolidone, polyacrylonitrile, polymethyl acrylate, polytetrafluoroethylene, sodium carboxymethyl cellulose, styrene-butadiene rubber, polyurethane, fluorinated rubber, and polyvinyl alcohol; and
the conductive carbon comprising at least one selected from the group consisting of conductive carbon black, carbon nanotubes, conductive graphite, graphene, acetylene black, and carbon nanofibers.

5. The electrochemical apparatus according to claim 1, wherein a combined thickness of the first portion and the fourth portion is the same as a thickness of the third portion, and a combined thickness of the second portion and the fifth portion is the same as the thickness of the third portion.

6. An electrochemical apparatus, comprising a negative electrode plate, wherein the negative electrode plate comprises:

a negative electrode current collector, wherein along a width direction of the negative electrode plate, the negative electrode current collector comprises a first zone, a second zone, and a third zone located between the first zone and the second zone;
a negative electrode active material layer, wherein the negative electrode active material layer comprises a first portion, a second portion, and a third portion that are disposed in the first zone, the second zone, and the third zone, respectively; and
a negative electrode coating layer;
wherein the negative electrode coating layer is located between the third portion and the third zone, or the third portion is located between the negative electrode coating layer and the third zone, and
combined impedance of the negative electrode coating layer and the third portion is greater than impedance of the first portion and greater than impedance of the second portion.

7. The electrochemical apparatus according to claim 6, wherein the negative electrode plate satisfies at least one of the characteristics from the group consisting of

a ratio of the impedance of the first portion to the combined impedance of the negative electrode coating layer and the third portion being 0.5 to 0.99, and a ratio of the impedance of the second portion to the combined impedance of the negative electrode coating layer and the third portion being 0.5 to 0.99;

a ratio of a width of the negative electrode coating layer to a width of the negative electrode active material layer being 0.75 to 0.99;

a thickness of the negative electrode coating layer being greater than 0.5 $\mu$m and less than 8 $\mu$m;

the negative electrode coating layer comprises a first binder and at least one of conductive carbon or ceramics; and

both a thickness of the first portion and a thickness of the second portion being greater than 20 $\mu$m and less than 200 $\mu$m.

8. The electrochemical apparatus according to claim 7, wherein the negative electrode coating layer comprises a second binder and at least one selected from the group consisting of conductive carbon and ceramics.

9. The electrochemical apparatus according to claim 8, wherein the negative electrode plate satisfies at least one of the characteristic from the group consisting of

a mass percentage of the first binder in the negative electrode coating layer being greater than 20%;

the first binder comprising at least one of polyvinylidene fluoride, a copolymer of vinylidene fluoride-fluorinated olefin, polyvinylpyrrolidone, polyacrylonitrile, polymethyl acrylate, polytetrafluoroethylene, sodium carboxymethyl cellulose, styrene-butadiene rubber, polyurethane, fluorinated rubber, or polyvinyl alcohol; and

the conductive carbon comprising at least one of conductive carbon black, carbon nanotubes, conductive graphite, graphene, acetylene black, or carbon nanofibers.

10. An electronic apparatus, comprising the electrochemical apparatus according to any one of claims 1 to 9.

FIG. 1

FIG. 2

FIG. 3

FIG. 4

## INTERNATIONAL SEARCH REPORT

International application No.

**PCT/CN2022/097271**

### A. CLASSIFICATION OF SUBJECT MATTER

H01M 4/13(2010.01)i; H01M 4/62(2006.01)i; H01M 10/0525(2010.01)i

According to International Patent Classification (IPC) or to both national classification and IPC

### B. FIELDS SEARCHED

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; WPABS; VEN; ENTXT; CNKI: 电池, 正极, 阴极, 负极, 阳极, 集流体, 阻抗, 绝缘, battery, positive electrode, cathode, negative electrode, anode, current collector, impedance, insulation

### C. DOCUMENTS CONSIDERED TO BE RELEVANT

| Category* | Citation of document, with indication, where appropriate, of the relevant passages | Relevant to claim No. |
|---|---|---|
| PX | CN 113394375 A (NINGDE AMPEREX TECHNOLOGY LTD.) 14 September 2021 (2021-09-14) description, paragraphs 15-82, and figures 1-4 | 1-10 |
| X | CN 207233865 U (NINGDE CONTEMPORARY AMPEREX TECHNOLOGY CO., LTD.) 13 April 2018 (2018-04-13) description, paragraphs 2-74, and figures 1-2 | 1-10 |
| X | CN 1525591 A (SANYO ELECTRIC CO., LTD.) 01 September 2004 (2004-09-01) description, page 1, line 12-page 9, line 17, and figures 1-7 | 1-5, 10 |
| X | CN 207353382 U (NINGDE CONTEMPORARY AMPEREX TECHNOLOGY CO., LTD.) 11 May 2018 (2018-05-11) description, paragraphs 3-88, and figures 1-5 | 6-10 |
| X | CN 205050932 U (HUIZHOU TCL HYPERPOWER BATTERIES INC. et al.) 24 February 2016 (2016-02-24) description, paragraphs 4-51, and figures 1-2 | 1-5, 10 |
| A | KR 20170021487 A (LG CHEMICAL LTD.) 28 February 2017 (2017-02-28) entire document | 1-10 |

☐ Further documents are listed in the continuation of Box C.　　☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **05 August 2022** | **19 August 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

<table>
<tr><td colspan="2" align="center">INTERNATIONAL SEARCH REPORT<br>Information on patent family members</td><td colspan="2">International application No.<br>**PCT/CN2022/097271**</td></tr>
</table>

| Patent document<br>cited in search report | Publication date<br>(day/month/year) | Patent family member(s) | | Publication date<br>(day/month/year) |
|---|---|---|---|---|
| CN 113394375 A | 14 September 2021 | None | | |
| CN 207233865 U | 13 April 2018 | None | | |
| CN 1525591 A | 01 September 2004 | US 2004202928 | A1 | 14 October 2004 |
| | | KR 20040076831 | A | 03 September 2004 |
| | | JP 2004259625 | A | 16 September 2004 |
| | | TW 200421651 | A | 16 October 2004 |
| | | TWI 233709 | B | 01 June 2005 |
| | | CN 100401573 | C | 09 July 2008 |
| | | US 7258948 | B2 | 21 August 2007 |
| | | JP 4201619 | B2 | 24 December 2008 |
| CN 207353382 U | 11 May 2018 | None | | |
| CN 205050932 U | 24 February 2016 | None | | |
| KR 20170021487 A | 28 February 2017 | None | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110662766